# EUROPEAN PATENT APPLICATION

(11) **EP 4 170 510 A1**
(43) Date of publication of application: **26.04.2023**
(21) Application number: 21832075.2
(22) Date of filing: 28.06.2021
(51) Int. Cl.: G06F 16/21

(54) **DATA MIGRATION METHOD AND APPARATUS, AND NETWORK DEVICE AND STORAGE MEDIUM**

(30) Priority: 28.06.2020 CN 202010602593
(71) Applicant: ZTE Corporation, Shenzhen, Guangdong 518057 (CN)
(72) Inventor: ZHANG, Qijun, Shenzhen, Guangdong 518057 (CN)
(74) Representative: Ipsilon
(86) International application number: PCT/CN2021/102712
(87) International publication number: WO 2022/001942

(57) **Abstract**

Provided are a data migration method and device, a network device, and a storage medium. The data migration method includes: determining (110) incremental migration data according to a Global Transaction Identifier value in a data storage information table, with the Global Transaction Identifier value being configured to indicate frequency of service processing; and migrating (120) the incremental migration data.

## Description

### CROSS-REFERENCE TO RELATED APPLICATIONS

The present disclosure claims the priority to the Chinese Patent Application No. 202010602593.4 filed with the CNIPA on June 28, 2020, the entire contents of which are incorporated herein by reference.

### TECHNICAL FIELD

The present disclosure relates to, but is not limited to, the field of database management technology.

### BACKGROUND

With the continuous evolution of distributed databases, high-speed networks and virtualization technology, the cloud technology has been widely applied, such as cloud desktops, cloud storage and cloud games. Due to the continuous change of service expansion requirements in all industries, service data is accumulated continuously along with time. When the accumulated service data is processed using existing distributed databases, the distributed databases are faced with the problem of insufficient performance.

### SUMMARY

In one aspect, the present disclosure provides a data migration method, including: determining incremental migration data according to a Global Transaction Identifier value in a data storage information table, wherein the Global Transaction Identifier value is configured to indicate frequency of service processing; and migrating the incremental migration data.

In another aspect, the present disclosure provides a data migration device, including: a determination module configured to determine incremental migration data according to a Global Transaction Identifier value in a data storage information table, wherein the Global Transaction Identifier value is configured to indicate frequency of service processing; and a migration module configured to migrate the incremental migration data.

In still another aspect, the present disclosure provides a network device, including: one or more processors; and a memory having stored thereon one or more programs, which, when executed by the one or more processors, cause the one or more processors to carry out the data migration method described herein.

In still another aspect, the present disclosure provides a storage medium having a computer program stored thereon, and when the computer program is executed by a processor, the data migration method described herein is carried out.

### BRIEF DESCRIPTION OF DRAWINGS

FIG. 1 is a flowchart illustrating a data migration method according to the present disclosure.
FIG. 2 is a flowchart illustrating a data migration method according to the present disclosure.
FIG. 3 is a schematic structural diagram of a data migration device according to the present disclosure.
FIG. 4 is a block diagram of a data migration system according to the present disclosure.
FIG. 5 is a flowchart illustrating an operating method of the data migration system according to the present disclosure.
FIG. 6 is a schematic diagram illustrating migrating data in a to-be-migrated partition by the data migration system according to the present disclosure.
FIG. 7 is a schematic diagram illustrating migrating incremental migration data by the data migration system according to the present disclosure.
FIG. 8 is a structural diagram illustrating an exemplary hardware architecture of a computing device capable of implementing the method and device according to the present disclosure.

### DETAIL DESCRIPTION OF EMBODIMENTS

In order to make the objectives, technical solutions and advantages of the present disclosure clearer, the implementations of the present disclosure are further described in detail below with reference to the drawings. It should be noted that the implementations described herein and the features therein can be arbitrarily combined with each other if no conflict is incurred.

With the continuous evolution of the distributed databases, the high-speed networks and the virtualization technology, the cloud technology has been widely applied, such as the cloud desktops, the cloud storage and the cloud games. Due to the continuous change of the service expansion requirements in all the industries, the service data is accumulated continuously along with time. When the accumulated service data is processed using the existing distributed databases, the distributed databases are faced with the problem of insufficient performance.

In the existing technology, the problem of insufficient performance may be solved by extending data storage servers or redistributing the accumulated data. Methods for redistributing the data may include an off-line redistributing method and an on-line redistributing method. However, it takes a lot of time to process the data in the above redistribution methods, resulting in poor user experience.

Under the same production environment, the off-line redistribution method is migrating the whole data first, and then redeploying the migrated data, which reduces the time for processing newly added hot spot data but needs to interrupt existing services in a specified table; and the online redistribution method allows migrating the whole data without interrupting the processing of the services, and then deploying the migrated data. However, no matter which redistribution method is adopted to migrate the data, a large amount of time is taken to process the whole data, resulting in low migration efficiency of the data; in addition, additional storage resources are also needed to store intermediate temporary data, resulting in unnecessary waste of the storage resources.

The present disclosure provides a data migration method and device, a network device, and a storage medium, and aims to at least solve the problem of the low migration efficiency when the data in the distributed databases is migrated.

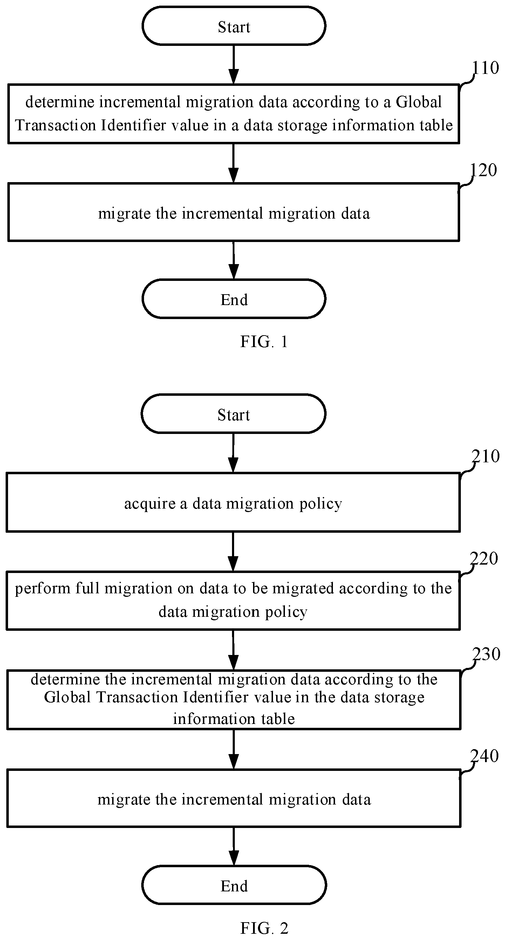

FIG. 1 is a flowchart illustrating a data migration method according to the present disclosure, and the method is applicable to a data migration device. As shown in FIG. 1, the method may include the following operations 110 and 120.

In operation 110, incremental migration data is determined according to a Global Transaction Identifier (GTID) value in a data storage information table.

The GTID value is configured to indicate frequency of service processing. For example, when a certain service is frequently executed, a GTID value corresponding to the service gradually increases with the number of execution times of the service, and when the GTID value corresponding to the service exceeds a preset range, it is indicated that the service is a hot spot service.

In some implementations, the operation 110 may be performed as follows: determining an active data list, which includes active data, according to the GTID value in the data storage information table and a preset identifier range; and screening the active data according to an incremental data migration decision to determine the incremental migration data, with the incremental data migration decision being a decision determined according to a dynamic processing requirement of a service.

It should be noted that the preset identifier range is variable. When the first incremental data migration is performed, a GTID list recorded in a current group database and a maximum GTID value (i.e., maxgtid) need to be acquired, and then a minimum GTID value (i.e., min_gtid) in the GTID list is taken as a minimum additional value (i.e., chase_min_gtid_1), at this time, the preset identifier range is: less than or equal to min_gtid. When the second incremental data migration is performed, chase_min_gtid_1 used in the first incremental data migration is taken as min_gtid, and the preset identifier range during the second incremental data migration is greater than or equal to chase_min_gtid_1 and less than chase_min_gtid_2. In the same way, when the i^{th} incremental data migration is performed, chase_min_gtid_i-1 used in the latest incremental data migration (i.e., the (i-1)^{th} incremental data migration) is taken as min_gtid, so the preset identifier range during the i^{th} incremental data migration is greater than or equal to chase_min_gtid_i-1 and less than chase_min_gtid_i, and i may be an integer greater than 1. Then all the data corresponding to the GTID values in the data storage information table falling within the preset identifier range is taken as the active data in the active data list.

By screening the active data according to the incremental data migration decision to determine the incremental migration data, the incremental migration data corresponding to the service can be quickly migrated, so as to satisfy the dynamic processing requirement of the service, shorten processing time for online data migration, and optimizing system performance of distributed database.

In operation 120, the incremental migration data is migrated.

In some implementations, the operation 120 may be performed as follows: acquiring a source storage address and a primary key value of the incremental migration data from the data storage information table, with the source storage address including a partition address and a group address; and migrating the incremental migration data from the source storage address to a destination storage address according to the source storage address and the primary key value.

For example, the primary key value corresponding to the incremental migration data and the source storage address (i.e., a source partition address and a source group address) of the incremental migration data may be acquired by searching the data storage information table according to the GTID value. For example, when the GTID value is 325, it may be found by searching the data storage information table that the primary key value corresponding to the incremental migration data is 8, and then it may be obtained accordingly that the incremental migration data corresponding to the primary key value of 8 is stored in a third partition of a first group, that is, the source storage address of the incremental migration data is the third partition of the first group. The incremental migration data in the third partition of the first group is then taken out, and is sent to the destination storage address. Or, a migration file is generated according to the incremental migration data taken out, and is sent to the destination storage address.

In the above implementations, the incremental migration data is determined according to the GTID value in the data storage information table. With the GTID value being configured to indicate the frequency of service processing, if the database processes data of a certain service more and more frequently, a GTID value corresponding to the data may increase faster, so that the data corresponding to the GTID value becomes the incremental migration data. When the incremental migration data needs to be migrated due to a requirement of the service, the data can be migrated to a desired device quickly, which reduces data migration time, increases data migration efficiency, and improves user experience.

The present disclosure provides another alternative implementation, in which, before the operation 110, the method further includes: dividing data storage space into N groups according to the primary key values in the data storage information table, with each group provided with a unique group address and divided into M partitions, each partition provided with a unique partition address, all data in a certain partition merely capable of being stored in the group corresponding to the certain partition, M being an integer greater than or equal to 1, and N being an integer greater than or equal to 1; and generating the data storage information table according to the primary key values, the GTID values, the partition addresses and the group addresses.

It should be noted that each primary key value is a unique identifier for finding data stored in a distributed database, and may generally be set to be greater than or equal to 1 and less than or equal to a maximum value of the number of pieces of data that the distributed database is capable of storing, and the primary key value may be used as an index value to search for the data in the distributed database. For example, the data storage space is divided into four groups, namely group g1, group g2, group g3, and group g4, and each group is provided with a unique group address. Then each group may be divided into different partitions, and the groups may vary in the number of the partitions, for example, the group g1 is divided into three partitions, namely partition P1, partition P2, and partition P3; the group g2 is divided into four partitions, namely partition P4, partition P5, partition P6, and partition P7; the group g3 is divided into five partitions, namely partition P8, partition P9, partition P10, partition P11, and partition P12; and the group g4 is divided into six partitions, namely partition P13, partition P14, partition P15, partition P16, partition P17, and partition P18. Each partition is provided with a unique partition address, and all the data in a certain partition is merely stored in the group corresponding to the certain partition, for example, the data in the partition P1 is merely stored in the group g1, and cannot be stored in two different groups at the same time. If the data in the partition P1 is stored in the group g1 and the group g2 at the same time, the data in the partition P1 may be truncated, and the data in the partition P1 may be lost when being migrated. In order to avoid the loss of the data in the partition P1, all the data in the partition P1 has to be stored in the group g1 to ensure integrity of the data.

The present disclosure provides another alternative implementation, in which, after the operation 120, the method further includes: clearing the data in the source storage address.

In this implementation, the data in the source storage address is cleared so as to be capable of providing a storage service for other data, thereby increasing the storage space of the distributed database, and avoiding waste of storage resources.

The present disclosure provides another alternative implementation, in which, after the operation 120, the method further includes: updating the data storage information table according to the destination storage address.

For example, after the data migration is completed, the source storage address of the incremental migration data is replaced with the destination storage address, so as to allow the incremental migration data to be found quickly in the next data migration.

In this implementation, by updating the data storage information table, the next data migration can be prepared, so that the incremental migration data can be found quickly in the next data migration, thereby increasing data processing efficiency, and optimizing the system performance of distributed database.

The present disclosure provides another alternative implementation, in which, after the operation 120, the method further includes: counting migration time of the incremental migration data; and stopping the migration of the incremental migration data according to the migration time and a preset time threshold.

The migration time is maximum time for the data migration device to process the incremental migration data, and the preset time threshold may be a time period such as 1 minute or 5 minutes. For example, if the migration time is less than or equal to 5 minutes, the migration of the incremental migration data is stopped. The preset time threshold is illustrated above merely by an example, and may be set according to situations when being implemented in practical applications. Other values of the preset time threshold that are not described herein are also within the scope of the present disclosure, and will not be described here.

In this implementation, by counting the migration time of the incremental migration data, it can be determined whether the migration process of the incremental migration data is successful; and by comparing the migration time with the preset time threshold, it can be determined whether to stop the migration process of the data. By ensuring the successful data migration of the incremental migration data to meet the processing requirement of the service, processing time for online data migration can be shortened, and the system performance of distributed database can be optimized.

FIG. 2 is a flowchart illustrating a data migration method according to the present disclosure, and the method is applicable to the data migration device. As shown in FIG. 2, the method may include the following operations 210 to 240.

In operation 210, a data migration policy is acquired.

The data migration policy is a policy determined by a database administrator (DBA) according to a data storage requirement. For example, in a case where storage space of a first partition in the distributed database fails to meet a data storage requirement, when newly acquired data needs to be stored in the first partition, part of the data in the first partition that is not used for a long time may be migrated to the other partitions, thus generating the data migration policy for allowing the first partition to obtain enough storage space to store the newly acquired data.

In operation 220, full migration is performed on data to be migrated according to the data migration policy.

The data to be migrated includes all data in a k^{th} partition, with k being an integer greater than or equal to 1 and less than or equal to M. For example, the data to be migrated is all the data in the first partition in the distributed database, and all the data in the first partition in the distributed database is migrated to a second partition, so that the first partition may obtain free storage space for conveniently storing other data in urgent need for processing.

In some implementations, the operation 220 may be performed as follows: determining a to-be-migrated partition corresponding to the data to be migrated according to the data migration policy; and migrating the data from the to-be-migrated partition to a destination partition.

For example, the data migration policy is a data merging policy, that is, the data in the first partition and the data in the second partition need to be merged to generate new data. Then the data in the partitions to be migrated (i.e., the first partition and the second partition) is migrated to a destination partition (e.g., a third partition). By performing the full migration on the data, all the data in the specified to-be-migrated partition of a source group just needs to be migrated to the destination partition of a destination group, with no need to perform data migration on other unspecified data, so that a data migration speed is increased, and the data migration time is saved.

In operation 230, the incremental migration data is determined according to the GTID value in the data storage information table.

In operation 240, the incremental migration data is migrated.

It should be noted that the operations 230 and 240 in this implementation are the same as the operations 110 and 120 in the above implementations, and thus will not be repeated here.

In this implementation, by performing the full migration on the data to be migrated according to the data migration policy, the data in the specified partition can be migrated, and data migration between the partitions can be achieved with no need for migration across the groups. By determining the incremental migration data according to the GTID value in the data storage information table and migrating the incremental migration data, the incremental migration data can be migrated during a dynamic processing process of a service without affecting normal processing of the service, so that continuity of the processing of the service can be ensured, and execution time for the data migration can be shortened. Moreover, requirements of the data migration can be met merely by maintaining the (one) data storage information table, which reduces requirements on hardware storage resources, saves user cost, and enhances product competitiveness.

In some implementations, simulation data is stored in the data storage information table, and technical performance obtained by processing the simulation data with the data migration method of the present disclosure and technical performance obtained by migrating the simulation data with a conventional data migration method are different.

For example, the data migration method of the present disclosure is performed in a following way. According to the primary key values, the storage space of the distributed database is formatted into 128 partitions having different ranges, namely partition P1, partition P2 ... and partition P128. Moreover, each partition is capable of storing a million pieces of data. As shown in Table 1, a data range of the partition P1 is [1,1000001), a data range of the partition P2 is [1000001,2000001) ... a data range of the partition P127 is [126000001,127000001), and a data range of the partition P128 is [127000001, MAXVALUE), and MAXVALUE represents the maximum primary key value in the distributed database, and may be defined when the database is created.

**Table 1 Partition Table**

| Partition Name | Range |
|---|---|
| P1 | [1,1000001) |
| P2 | [1000001,2000001) |
| ... | ... |
| P127 | [126000001,127000001) |
| P128 | [127000001, MAXVALUE) |

The 128 partitions are divided into three groups, which are referred to as group g1, group g2, and group g3, each group owns and manages a plurality of corresponding partitions in the data storage information table, and valid data is stored in the corresponding partitions as shown in Table 2, for example, the valid data partitions in the group g1 are the partitions P1 to P10, the valid data partitions in the group g2 are the partitions P11 to P70, and the valid data partitions in the group g3 are the partitions P71 to P128. The DBA analyzes the data in each partition, and makes the data migration policy according to the data storage requirement.

For example, a merging and migration policy illustrated by Table 3 is merging the data in the to-be-migrated partitions P1 to P10 in the group g1 with the data in the to-be-migrated partitions P11 to P70 in the group g2, and then storing in the group g3; or a splitting and migration policy illustrated by Table 4 is storing the data, which is stored in the to-be-migrated partitions P1 to P10 in the group g3, in the group g1, and storing the data, which is stored in the to-be-migrated partitions P11 to P70 in the group g3, in the group g2.

After the data is migrated by executing the merging and migration policy illustrated by the Table 3, first merging time of the data is counted; and after the data is migrated by executing the splitting and migration policy illustrated by the Table 4, first splitting time of the data is counted.

**Table 2 Group/Partition Table**

| Partition Name | Valid Data Partition |
|---|---|
| g1 | P1-P10 |
| g2 | P11-P70 |
| g3 | P71-P128 |

**Table 3 Merging and Migration Policy**

| Source Group gs | To-be-migrated partition Pk | Destination Group gd |
|---|---|---|
| g1 | P1-P10 | g3 |
| g2 | P11-P70 | g3 |

**Table 4 Splitting and Migration Policy**

| Source Group gs | To-be-migrated Partition Pk | Destination Group gd |
|---|---|---|
| g3 | P1-P10 | g1 |
| g3 | P11-P70 | g2 |

Then, according to the above data, the data in the distributed database is migrated with the conventional data migration method. For example, the database language "distributed by range(key)(g3 values less than MAXVALUE)" is executed to perform the data merging illustrated by the Table 3, that is, merging the data in the to-be-migrated partitions P1 to P10 in the group g1 with the data in the to-be-migrated partitions P11 to P70 in the group g2, and counting second merging time taken when the conventional data merging method is adopted.

The database language "distributed by range(key)(g2 values less than (10000000), g1 values less than (70000000), g3 values less than MAXVALUE)" is executed to perform the data splitting illustrated by the Table 4, that is, storing the data, which is stored in the to-be-migrated partitions P1 to P10 in the group g3, in the group g1, storing the data, which is stored in the to-be-migrated partitions P11 to P70 in the group g3, in the group g2, and counting second splitting time taken when the conventional data splitting method is adopted.

As shown in Table 5, after comparing the technical performance (e.g., the merging time and the splitting time) obtained by performing the data migration method of the present disclosure with the technical performance (e.g., the merging time and the splitting time) obtained by performing the conventional data migration method, it can be seen that the second splitting time for splitting the data with the conventional data migration method is 3722 seconds, and the second merging time is 1205 seconds; and the first splitting time for splitting the data with the data migration method of the present disclosure is 208 seconds, and the first merging time is 238 seconds. The first splitting time is far less than the second splitting time, and the first merging time is also far less than the second merging time. Therefore, the data migration method of the present disclosure can improve the performance of the database.

**Table 5 Comparison Table of Technical Performance of Two Data Migration Methods**

| Scheme | Merging Time (unit: second) | Splitting Time (unit: second) |
|---|---|---|
| Conventional data migration method | 1205 | 3722 |
| Data migration method of the present disclosure | 238 | 208 |

In this embodiment, the data in the distributed database is migrated with the data migration method of the present disclosure, and the first splitting time and the first merging time are counted; and the data in the distributed database is migrated with the conventional data migration method, and the second splitting time and the second merging time are counted. It can be directly seen by comparison that the processing time of the data is greatly reduced by adopting the data migration method of the present disclosure, so that the performance of the database can be greatly improved, and the user experience can be improved.

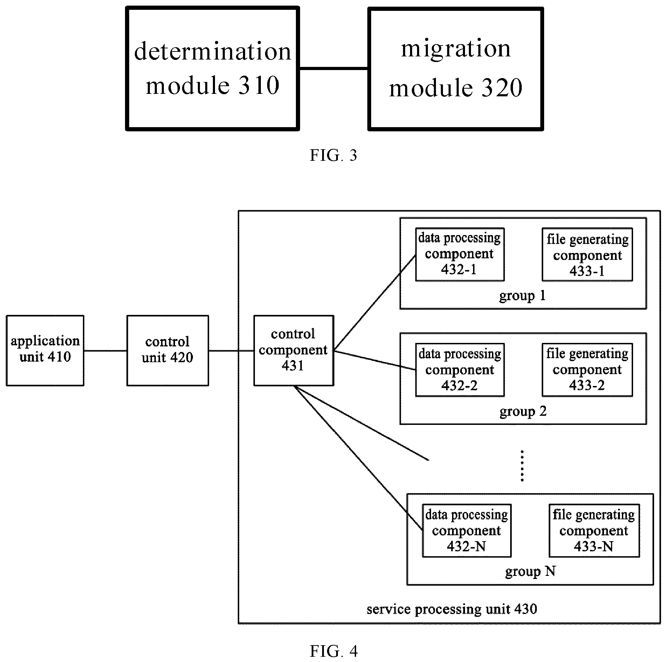

A device provided by the present disclosure will be described in detail below with reference to the drawings. FIG. 3 is a schematic structural diagram of a data migration device according to the present disclosure. As shown in FIG. 3, the data migration device may include the following modules.

A determination module 310 is configured to determine incremental migration data according to a GTID value in a data storage information table, with the GTID value being a value which monotonically increases with service processing; and a migration module 320 is configured to migrate the incremental migration data.

In this implementation, the incremental migration data is determined by the determination module according to the GTID value in the data storage information table. With the GTID value being configured to indicate frequency of the service processing, if a database processes data of a certain service more and more frequently, a GTID value corresponding to the data may increase faster, so that the data corresponding to the GTID value becomes the incremental migration data. When the incremental migration data needs to be migrated by the migration module due to a requirement of the service, the data can be migrated to a desired device quickly, which reduces data migration time, increases data migration efficiency, and improves user experience.

It should be noted that each module involved in this implementation is a logic module/unit. In practical applications, one logical unit may be one physical unit or a portion of one physical unit, and may also be implemented by a combination of a plurality of physical units. In addition, in order to highlight the inventive part of the present disclosure, a unit which is less closely related to the solution to the technical problem proposed by the present disclosure is not introduced in this implementation, which does not indicate that no other unit exists in this implementation.

FIG. 4 is a block diagram of a data migration system according to the present disclosure. As shown in FIG. 4, the data migration system includes: an application unit 410, a control unit 420, and a service processing unit 430. The service processing unit 430 includes N groups each including a control component and a data processing component, for example, the group 1 includes a data processing component 432-1 and a file generating component 433-1, the group 2 includes a data processing component 432-2 and a file generating component 433-2 ... and the group N includes a data processing component 432-N and a file generating component 433-N. N is an integer greater than or equal to 1.

In some implementations, the application unit 410 may be implemented by an Oracle Metadata Management (OMM) component, and a DBA may formulate a data migration policy Rk according to a data storage requirement through a management page in the OMM component, and send the data migration policy Rk to the control unit 420. The control unit 420 may be implemented by a Metadata Server (MDS). The MDS is mainly configured to search the data storage information table for each partition address where data is stored and each group address where data is stored, and then filter out a partition address of an empty partition where no data is stored. The data migration policy Rk sent by the OMM component is received and processed, and is sent to the service processing unit 430, and meanwhile, a feedback result is received from the service processing unit, and is forwarded to the OMM component, so as to allow the OMM component to update the data migration policy Rk.

The control component 431 in the service processing unit 430 is configured to receive a decision issued by the MDS component, forward the decision to all the groups (e.g., the group 1, the group 2 ... and the group N) managed by the control component 431 by multicasting, and feed a processing result of each group back to the MDS component. For example, after receiving an incremental data migration decision issued by the control component 431, the data processing component 432-1 in the group 1 first determines the incremental migration data according to the incremental data migration decision, performs an data export operation on the incremental migration data, and then sends the exported incremental migration data to the file generating component 433-1 in the group 1, so as to enable the file generating component 433-1 to generate a data transmission file according to the exported incremental migration data, and import the data transmission file into a destination storage address, and feed the processing result back to the control component 431 after the import operation is completed.

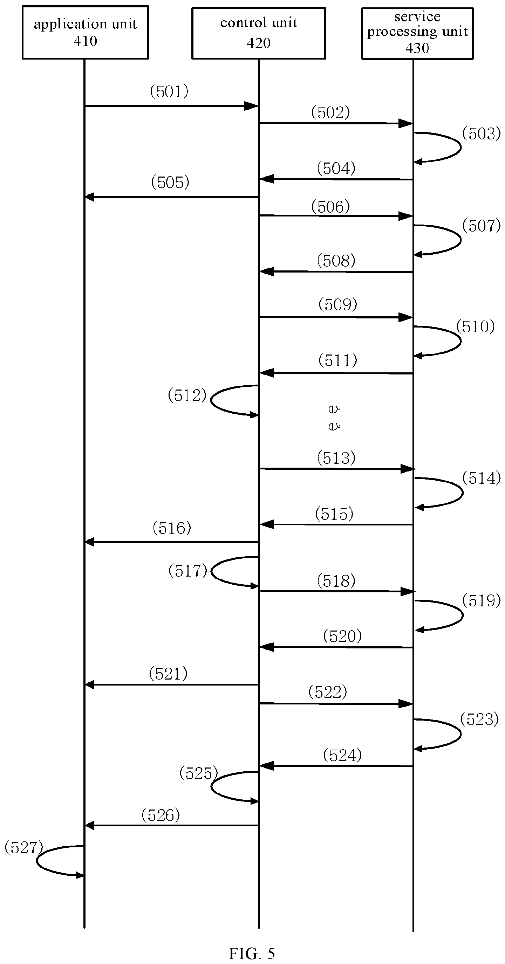

FIG. 5 is a flowchart illustrates an operating method of the data migration system according to the present disclosure. Without affecting services, data in a specified partition in the data storage information table needs to be processed first; then some active data in the specified partition is processed; and finally, the data storage information table is updated when the processing is completed.

It should be noted that data storage in the service processing unit 430 is achieved by adopting a distributed database, which is divided into M partitions according to primary key values, and each partition is provided with a unique partition address, such as partition P₁, partition P₂ ... and partition P_{M}; then some of the partitions are gathered into one group, for example, the partitions may be divided into N groups, and each group is provided with a unique group address, such as group g₁, group g₂ ... and group g_{N}; and valid data in one partition is merely stored in the group corresponding to the partition. N is an integer greater than or equal to 1, and M is an integer greater than or equal to 1. Then the primary key values, the GTID values, all the partition addresses, and all the group addresses are recorded in the data storage information table.

Migration of the data may include three stages, and include the following operations as shown in FIG. 5.

First stage: full data migration, including operations 501 to 508.

In operation 501, the application unit 410 sends the data migration policy formulated by the DBA according to data storage requirement to the control unit 420.

For example, the DBA formulates the data migration policy Rk={Pk, gs, gd} according to the data storage requirement through the management page in the OMM component, and the policy indicates that the data in the k^{th} partition Pk in the data storage information table needs to be migrated from a source group (gs) of the data to a destination group (gd). Merely a partition identifier of the partition where the valid data is located and a group identifier of the group where the valid data is located are displayed in the management page, and partition identifiers of the partitions having no data stored therein or group identifiers of the groups having no data stored therein are removed by filtering.

In operation 502, the control unit 420 forwards the data migration policy Rk to the control component 431 in the service processing unit 430.

It should be noted that, after receiving the data migration policy Rk, the control component 431 first parses the data migration policy Rk to obtain the information therein, such as the partition identifier Pk of the partition where the data to be migrated is located, the source group gs, and the destination group gd. Then, the control component 431 sends the information obtained by the parsing to all the groups by multicasting, so as to allow the data processing component in the corresponding group to migrate the data stored therein.

In operation 503, the service processing unit 430 processes the data to be migrated, and generates the data transmission file.

For example, the data processing component in the service processing unit 430 acquires a GTID list and a maximum value (maxgtid) by searching the data storage information table, takes out a minimum value in the GTID list, and records the minimum value as a minimum full load ID (full_min_gtid). The data processing component acquires and exports the data to be migrated according to full_min_gtid and the GTID list. For example, the data may be acquired using a filter statement in the database. Then the data to be migrated is sent to the file generating component to generate the data transmission file Ts.k.

In operation 504, the service processing unit 430 reports a data export result (i.e., the data transmission file Ts.k) and full_min_gtid to the control unit 420.

In operation 505, the control unit 420 reports the data export result to the application unit 420. At the same time, the operation 506 is performed.

In operation 506, the control unit 420 issues a data import decision to the service processing unit 430.

In operation 507, after receiving the data import decision, the control component in the service processing unit 430 forwards the data import decision to gd by multicasting. After receiving the data import decision, gd parses the data transmission file Ts.k, imports the data to be migrated, and then feeds a data import result back to the control component when the import operation is completed.

In operation 508, the control component in the service processing unit 430 feeds the data import result back to the control unit 420. Thus, the full data migration is completed.

Second stage: incremental data migration, that is, updating of hot spot data in a specified partition, including operations 509 to 521.

In operation 509, the control unit 420 issues an incremental data migration decision Hk={Pk, gs, gd, min_gtid} to the control component 431 in the service processing unit 430.

The min_gtid represents a GTID value of gs, and is equal to full_min_gtid when the incremental data migration is performed for the first time.

In operation 510, the service processing unit 430 migrates the incremental migration data according to the incremental data migration decision Hk.

For example, the control component 431 sends the incremental data migration decision Hk to gs by multicasting, and after receiving the incremental data migration decision Hk, gs records a GTID list and maxgtid in the data storage information table in a current group database, and takes a minimum GTID value in the GTID list as a minimum additional value (i.e., chase_min_gtid_i), with i being an integer greater than 1. Then, the data in the partition Pk corresponding to a GTID value greater than or equal to min_gtid and less than chase_min_gtid_i is taken as the incremental migration data, and the incremental migration data is exported. For example, the incremental migration data may be acquired using the filter statement in the database. The incremental migration data is stored in an incremental data transmission file Tsql.k. The incremental data transmission file Tsql.k is sent to gd, so as to enable gd to parse the incremental data transmission file Tsql.k, and import the incremental migration data into a local database of gd. gs feeds an export result, an import result and information {gs, chase_min_gtid_i} of the incremental migration data back to the control component 431.

In operation 511, the service processing unit 430 forwards the export result, import result, and information {gs, chase_min_gtid_i} of the incremental migration data to the control unit 420.

In operation 512, after receiving the export result, import result, and information {gs, chase_min_gtid_i} of the incremental migration data fed back by the service processing unit 430, the control unit 420 updates min_gtid to chase_min_gtid_i. Then the control unit 420 determines whether the incremental data migration needs to be performed again according to a dynamic processing requirement of a service. If the incremental data migration needs to be performed again, the operations 509 to 511 are repeated (for example, operations 513 to 515 are performed). The implementations of the operations 513 to 515 shown in FIG. 5 are the same as the implementations of the operations 509 to 511, and thus will not be repeated here.

It should be noted that, for the incremental data migration, each group exports corresponding incremental migration data according to chase_min_gtid_i of the latest time of the incremental data migration during the migration process since the second time of incremental data migration, until the incremental data migration does not need to be performed any more.

In operation 516, the control unit 420 reports a migration result of the incremental migration data to the application unit 410.

In operation 517, the control unit 420 counts migration time of single incremental data migration, i.e., maximum processing time Tuse of each component, and compares Tuse with a preset time threshold Tpre (e.g., 1 minute or 15 minutes), and performs the incremental data migration for the last time when Tuse is less than or equal to Tpre, that is, performing operations 518 to 520.

In operation 518, the control unit 420 issues an incremental data migration decision Hk={Pk, gs, gd, chase_min_gtid_n} for the last time of the incremental data migration to the service processing unit 430.

In operation 519, the service processing unit 430 migrates the incremental migration data according to the incremental data migration decision Hk for the last time of the incremental data migration.

In operation 520, the service processing unit 430 forwards an export result, an import result, and information {gs, chase_min_gtid_n} of the last time of the incremental migration data to the control unit 420. Then, the incremental data migration is stopped.

In operation 521, the control unit 420 reports a migration complete message to the application unit 410, that is, reporting that the incremental data migration has been completed.

Third stage: a table definition switching process, that is, clearing the data in a source storage address (including a partition address and a group address), including operations 522 to 527.

In operation 522, the control unit 420 issues a clearing decision Ck={Pk, gs} to the service processing unit 430.

In operation 523, the service processing unit 430 clears the data in the source storage address according to the clearing decision Ck.

For example, after receiving the clearing decision Ck, the service processing unit 430 forwards the clearing decision Ck to gs by multicasting, and gs performs cleaning processing on the data stored in the partition Pk in a local data storage information table according to the clearing decision Ck, and then feeds a clearing result back to the control component 431.

In operation 524, the service processing unit 430 forwards the clearing result to the control unit 420.

In operation 525, the control unit 420 updates the data storage information table according to a destination storage address (e.g., an address of gd) to which the data is migrated.

For example, the data originally stored in the partition Pk of the group gs is forwarded to the new group gd, and the updated data storage information table is represented as Dt1={Pk, gd}.

In operation 526, the control unit 420 feeds a clearing result back to the application unit 410, that is, sending the updated data storage information table Dt1={Pk, gd} to the application unit 410.

In operation 527, the application unit 410 receives the updated data storage information table Dt1={Pk, gd}, and display the updated data storage information table Dt1={Pk, gd} on the management page.

In this implementation, without affecting the processing of the services, the changing data or the incremental data in the distributed data can be migrated through the full data migration, the incremental data migration and the table definition switching process to meet the processing requirements of the services, so that the processing time for the online data migration can be shortened, and the system performance of distributed database can be greatly optimized. Meanwhile, merely one data storage information table needs to be maintained during the data migration process, with no need for other intermediate temporary tables, which avoids the waste of the storage spaces.

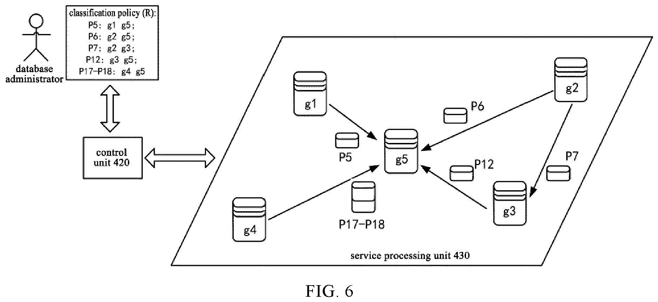

FIG. 6 is a schematic diagram illustrating migrating the data in a to-be-migrated partition by the data migration system according to the present disclosure. As shown in FIG. 6, the DBA sets a classification policy (R), and issues the classification policy (R) to the control unit 420; and then the control unit 420 parses the classification policy (R), obtains a parsing result, and sends the parsing result to the service processing unit 430. For example, the classification policy (R) includes the following migration rules: 1) P5: g1 g5; 2) P6: g2 g5; 3) P7: g2 g3; 4) P12: g3 g5; 5) P17-P18: g4 g5. P5, P6, P7, P12, and P17-P18 all represent to-be-migrated partitions.

As shown in FIG. 6, with a new group g5 established to share some storage pressure for a distributed database system, the data in the 5^{th} partition P5 may be migrated from the source group g1 to the destination group g5 according to the first rule in the classification policy (R); the data in the 6^{th} partition P6 may be migrated from the source group g2 to the destination group g5 according to the second rule in the classification policy (R); the data in the 7^{th} partition P7 may be migrated from the source group g2 to the destination group g3 according to the third rule in the classification policy (R); the data in the 12^{th} partition P12 may be migrated from the source group g3 to the destination group g5 according to the fourth rule in the classification polity (R); and the data in the 17^{th} partition P17 and the data in the 18^{th} partition P18 may be migrated from the source group g4 to the destination group g5 according to the fifth rule in the classification policy (R).

In this implementation, by migrating the data in the different partitions from the source groups to the newly established group, storage pressure of the source groups can be relieved, an online service processing capability of each source group can be improved, the data to be migrated can be automatically migrated without interrupting the processing of the services, the data processing speed can be increased, and processing efficiency of distributed database can be increased, and the user experience can be improved.

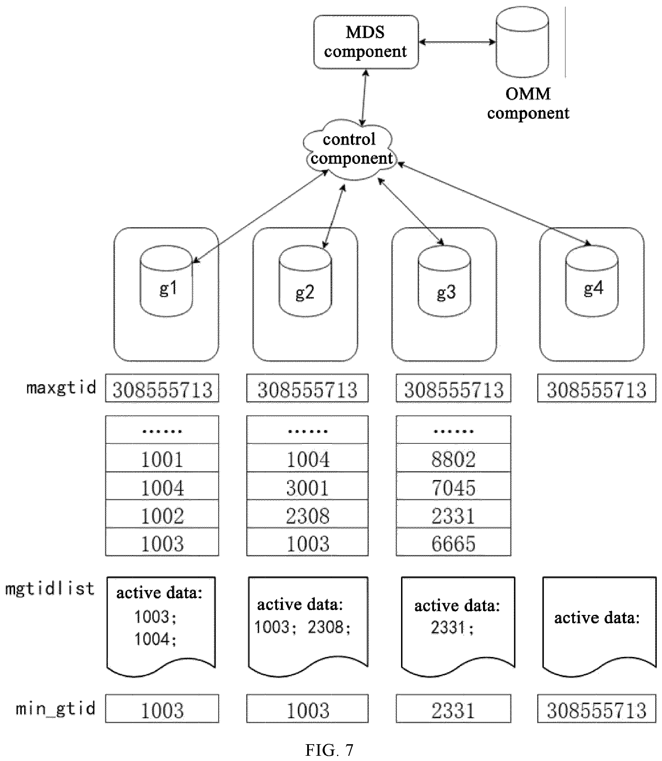

FIG. 7 is a schematic diagram illustrating migrating the incremental migration data by the data migration system according to an implementation of the present disclosure. As shown in FIG. 7, the OMM component sends the data migration policy to the MDS component; and after receiving the data migration policy, the MDS component parses the data migration policy to obtain the incremental data migration decision, that is, respectively screening active data in active data lists of the group g1, the group g2, the group g3, and the group g4 and migrating the incremental migration data. Then the MDS component respectively sends the incremental data migration decision to the group g1, the group g2, the group g3, and the group g4.

It should be noted that FIG. 7 may be displayed in the management page of the OMM component to enable the DBA to dynamically obtain a data migration situation of each group in a convenient way.

As shown in FIG. 7, the maximum GTID values of the four groups are all 308555713. A plurality of pieces of data having the GTID values of 1001, 1004, 1002, and 1003 are stored in the group g1, and the data having the GTID value of 1004 and the data having the GTID value of 1003 are the active data, so the active data list (i.e., mgtidlist) of the group g1 includes the data having the GTID value of 1004 and the data having the GTID value of 1003; moreover, the GTID value of 1003 is the minimum value in the active data list. Therefore, when the incremental migration data is acquired from the group g1, according to the incremental data migration decision, each transaction corresponding to the data having the GTID value less than 1003, i.e., the data having the GTID value of 1001 and the data having the GTID value of 1002, needs to be exported.

For the group g2, the data stored in the group g2 includes a plurality of pieces of data having the GTID values of 1004, 3001, 2308, and 1003, and the data having the GTID value of 3001, the data having the GTID value of 2308, and the data having the GTID value of 1003 are the active data, so the active data list of the group g2 includes the data having the GTID value of 3001, the data having the GTID value of 2308, and the data having the GTID value of 1003. When the incremental migration data is acquired from the group g2, according to the incremental data migration decision (that is, exporting each transaction corresponding to the data having a GTID value less than 1003), the incremental migration data acquired from the group g2 is none because there is no data having the GTID value less than 1003 in the active data list of the group g2, that is, there is no incremental migration data in the group g2 capable of being migrated.

For the group g3, the data stored in the group g3 includes a plurality of pieces of data having the GTID values of 8802, 7045, 2331, and 6665, and the data having the GTID value of 8802, the data having the GTID value of 7045, the data having the GTID value of 2331, and the data having the GTID value of 6665 are the active data, so the active data list of the group g3 includes the data having the GTID value of 8802, the data having the GTID value of 7045, the data having the GTID value of 2331, and the data having the GTID value of 6665. When the incremental migration data is acquired from the group g3, according to the incremental data migration decision (that is, exporting each transaction corresponding to the data having a GTID value less than 2331), the incremental migration data acquired from the group g3 is none because there is no data having the GTID value less than 2331 in the active data list of the group g3, that is, there is no incremental migration data in the group g3 capable of being migrated.

For the group g4, since the group g4 has no data stored therein and is an empty group, the group g4 also does not include the active data, at this time, the maximum GTID value (i.e., 308555713) is taken as the minimum value of the active data. According to the incremental data migration decision (i.e., exporting each transaction corresponding to the data having a GTID value less than 308555713), the incremental migration data acquired from the group g4 is none, that is, there is no incremental migration data in the group g4 capable of being migrated.

In this implementation, by concurrently screening the active data lists of the different groups according to the incremental data migration decision, the active data in each group can be processed quickly, so that data processing time is shortened, the system performance of distributed database is optimized, and the product competitiveness is improved. Moreover, by displaying a data storage situation of each group graphically in the management page of the OMM component, a data migration change of each group can be visually viewed, so that system complexity of distributed database is simplified, and an operation and maintenance cost is reduced.

It should be noted that the present disclosure is not limited to the particular configurations and processes described in the above implementations and illustrated in the drawings. For convenience and simplicity of description, detailed description of a known method is omitted herein, reference may be made to corresponding processes in the above implementations of the method for specific operating processes of the systems, modules and units described above, and those specific operating processes will not be repeated here.

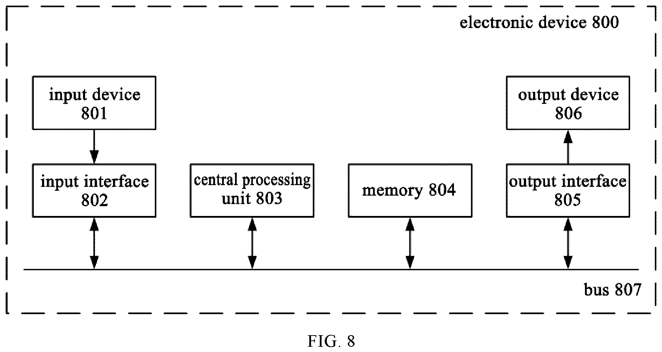

FIG. 8 is a structural diagram illustrating an exemplary hardware architecture of a computing device capable of implementing the method and device according to the implementations of the present disclosure.

As shown in FIG. 8, a computing device 800 includes an input device 801, an input interface 802, a central processing unit (CPU) 803, a memory 804, an output interface 805, and an output device 806. The input interface 802, the CPU 803, the memory 804, and the output interface 805 are connected to each other via a bus 807, and the input device 801 and the output device 806 are connected to the bus 807 through the input interface 802 and the output interface 805 respectively, and are further connected to other components of the computing device 800.

Specifically, the input device 801 receives input information from the outside, and transmits the input information to the CPU 803 through the input interface 802; the CPU 803 processes the input information based on a computer-executable instruction stored in the memory 804 to generate output information, stores the output information temporarily or permanently in the memory 804, and then transmits the output information to the output device 806 through the output interface 805; and the output device 806 outputs the output information outside the computing device 800 for being used by a user.

In an implementation, the computing device 800 shown in FIG. 8 may be implemented as a network device, which may include: a memory configured to store a program; and a processor configured to execute the program stored in the memory to perform the data migration method described in the above implementations.

According to the data migration method and device, the network device and the storage medium provided by the present disclosure, the incremental migration data is determined according to the GTID value in the data storage information table; with the GTID value being configured to indicate the frequency of the service processing, if a database processes data of a certain service more and more frequently, a GTID value corresponding to the data may increase faster, so that the data corresponding to the GTID value becomes the incremental migration data. When the incremental migration data needs to be migrated due to a requirement of the service, the data can be migrated to a desired device quickly, which reduces the data migration time, increases the data migration efficiency, and improves the user experience.

In general, the various implementations of the present disclosure may be implemented by hardware or special circuits, software, logic or any combination thereof. For example, some aspects of the present disclosure may be implemented by hardware and other aspects may be implemented by firmware or software executable by a controller, a microprocessor or another computing device, but the present disclosure is not limited thereto.

The implementations of the present disclosure may be implemented by a data processor of a mobile device executing computer program instructions. For example, the implementations of the present disclosure are implemented in a processor entity, or by hardware, or by a combination of software and hardware. The computer program instructions may be assembly instructions, Instruction Set Architecture (ISA) instructions, machine instructions, machine-related instructions, microcode, firmware instructions, state setting data, or source code or object code written in one programming language or in any combination of a plurality of programming languages.

A block diagram illustrating any logic flow in the drawings of the present disclosure may show operations of a program, or interconnected logic circuits, modules and functions, or a combination of the operations of the program and the logic circuits, modules and functions. The computer program can be stored on a memory. The memory may be in any type suitable to local technical environment and may be implemented using any suitable data storage technology. For example, the memory is, but not limited to, a Read-Only Memory (ROM), a Random Access Memory (RAM), and an optical storage device and system (a Digital Video Disc (DVD) or a Compact Disc (CD)). The computer-readable medium may include a non-transitory storage medium. The data processor may be in any type suitable to the local technical environment. For example, the data processor is, but not limited to, a general-purpose computer, a special purpose computer, a microprocessor, a Digital Signal Processors (DSP), an Application Specific Integrated Circuit (ASIC), a Field Programmable Gate Array (FGPA) and a processor based on multicore architecture.

The exemplary implementations of the present disclosure are illustrated in detail above by exemplary and non-limiting examples. For those of ordinary skill in the art, various modifications and adjustments to the above implementations can be obviously derived from the drawings and the appended claims, but those modifications and adjustments are not beyond the scope of the present disclosure. Therefore, the proper scope of the present disclosure is defined by the appended claims.

## Claims

1. A data migration method, comprising:
determining incremental migration data according to a Global Transaction Identifier value in a data storage information table, wherein the Global Transaction Identifier value is configured to indicate frequency of service processing; and
migrating the incremental migration data.

2. The method of claim 1, wherein determining the incremental migration data according to the Global Transaction Identifier value in the data storage information table comprises:
determining an active data list, which comprises active data, according to a preset identifier range and the Global Transaction Identifier value in the data storage information table; and
screening the active data according to an incremental data migration decision to determine the incremental migration data, wherein the incremental data migration decision is a decision determined according to a dynamic processing requirement of a service.

3. The method of claim 2, wherein migrating the incremental migration data comprises:
acquiring a source storage address and a primary key value of the incremental migration data from the data storage information table, wherein the source storage address comprises a partition address and a group address; and
migrating the incremental migration data from the source storage address to a destination storage address according to the source storage address and the primary key value.

4. The method of claim 3, after migrating the incremental migration data, further comprising:
clearing data in the source storage address.

5. The method of claim 3, after migrating the incremental migration data, further comprising:
updating the data storage information table according to the destination storage address.

6. The method of any one of claims 1 to 5, after migrating the incremental migration data, further comprising:
counting migration time of the incremental migration data; and
stopping migration of the incremental migration data according to the migration time and a preset time threshold.

7. The method of claim 1, before determining the incremental migration data according to the Global Transaction Identifier value in the data storage information table, further comprising:
dividing a data storage space into N groups according to primary key values in the data storage information table, with each group provided with a unique group address, wherein N is an integer greater than or equal to 1;
dividing the groups into M partitions, each partition provided with a unique partition address, wherein all data in a certain partition is stored merely in a group corresponding to the certain partition, and M is an integer greater than or equal to 1; and
generating the data storage information table according to the primary key values, Global Transaction Identifier values, partition addresses, and group addresses.

8. The method of claim 7, before determining the incremental migration data according to the Global Transaction Identifier value in the data storage information table, further comprising:
acquiring a data migration policy, wherein the data migration policy is a policy determined by a database administrator according to a data storage requirement; and
performing full migration on data to be migrated according to the data migration policy, wherein the data to be migrated comprises all data in a kth partition, and k is an integer greater than or equal to 1 and less than or equal to M.

9. The method of claim 8, wherein performing the full migration on the data to be migrated according to the data migration policy comprises:
determining a to-be-migrated partition corresponding to the data to be migrated according to the data migration policy; and
migrating data in the to-be-migrated partition to a destination partition.

10. A data migration device, comprising:
a determination module configured to determine incremental migration data according to a Global Transaction Identifier value in a data storage information table, wherein the Global Transaction Identifier value is configured to indicate frequency of service processing; and
a migration module configured to migrate the incremental migration data.

11. A network device, comprising:
one or more processors; and
a memory having stored thereon one or more programs, which, when executed by the one or more processors, cause the one or more processors to carry out the method of any one of claims 1 to 9.

12. A storage medium having a computer program stored thereon, wherein, when the computer program is executed by a processor, the method of any one of claims 1 to 9 is carried out.
